# EUROPÄISCHE PATENTSCHRIFT

(11) **EP 1 210 509 B1**
(45) Veröffentlichungstag und Bekanntmachung des Hinweises auf die Patenterteilung: **16.02.2005**
(21) Anmeldenummer: 00958329.5
(22) Anmeldetag: 31.07.2000
(51) Int. Cl.: F02D 41/02, F02D 41/40

(54) **VERFAHREN ZUR REGELUNG EINES VERBRENNUNGSVORGANGS IN EINER VERBRENNUNGSKRAFTMASCHINE WÄRHREND EINER REGENERATION EINES SPEICHERKATALYSATORS**
METHOD FOR REGULATING A COMBUSTION PROCESS IN AN INTERNAL COMBUSTION ENGINE DURING THE REGENERATION OF A STORAGE CATALYST
PROCEDE DE REGULATION D'UNE OPERATION DE COMBUSTION D'UN MOTEUR A COMBUSTION INTERNE PENDANT LA REGENERATION D'UN CATALYSEUR A ACCUMULATEUR

(30) Priorität: 18.08.1999 DE 19939053
(43) Veröffentlichungstag der Anmeldung: 05.06.2002
(73) Patentinhaber: Volkswagen Aktiengesellschaft, 38436 Wolfsburg (DE)
(72) Erfinder: POTT, Ekkehard, D-38518 Gifhorn (DE); BOSSE, Rolf, D-38440 Wolfsburg (DE); KLARHOEFER, Christian, D-38440 Wolfsburg (DE)
(74) Vertreter: Schneider, Henry, Dipl.-Ing.
(86) Internationale Anmeldenummer: PCT/EP2000/007376
(87) Internationale Veröffentlichungsnummer: WO 2001/012969

(56) Entgegenhaltungen:
- EP-A- 0 732 485
- EP-A- 0 858 837
- EP-A- 0 860 594

## Beschreibung

Die Erfindung betrifft ein Verfahren zur Regelung eines Verbrennungsvorgangs in einer Verbrennungskraftmaschine während einer Regeneration eines in einem Abgaskanal der Verbrennungskraftmaschine angeordneten NOₓ-Speicherkatalysators.

Es ist bekannt, ein während des Verbrennungsvorgangs eines Luft-Kraftstoff-Gemisches in der Verbrennungskraftmaschine, insbesondere einer Dieselbrennkraftmaschine, entstehendes Abgas durch geeignete Katalysatoren zu reinigen, die in dem Abgaskanal angeordnet sind. Befindet sich die Verbrennungskraftmaschine dabei in einem Arbeitsmodus, in dem ein Gehalt eines Kraftstoffes einen Gehalt an Sauerstoff übersteigt, oder dieselben in stöchiometrischen Verhältnissen vorliegen, so können in dem Abgas in einem vermehrten Maße Reduktionsmittel, wie CO, HC oder H₂, auftreten. In einem solchen Arbeitsmodus ist λ ≤ 1 (Regenerationsbetrieb). Sofern in einem ausreichenden Maße an den Katalysatoren noch Sauerstoff vorhanden ist, werden die Reduktionsmittel dort größtenteils zu Wasser und Kohlendioxid oxidiert. Im allgemein ist jedoch ein Betrieb der Verbrennungskraftmaschine im Regenerationsbetrieb aufgrund eines erhöhten Kraftstoffverbrauchs zu vermeiden.

Der Stand der Technik gemäß der EP-A-0 732 485 offenbart in einem Ausführungsbeispiel, daß bei Regeneration des NOx- Speicher- Katalysators Lambda < oder = 1 eingestellt wird, wobei zumindest während eines Teils der Einspritzung der Einspritzdruck des Kraftstoffs erhöht wird und der Einspritzzeitpunkt gegenüber Magerbetrieb vorgezogen wird.

Außerdem wird in einem anderen Ausführungsbeispiel gemäß der EP-A-0 732 485 offenbart, daß die Diesel - Brennkraftmaschine mit Verminderung der Luftmenge und Abgasrückführung im Regenrationsbetrieb betrieben werden kann , um Lambda < oder = 1 zur Regeneration zu erreichen.

Überwiegt der Sauerstoffgehalt den Kraftstoffgehalt in dem Luft-Kraftstoff-Gemisch während des Verbrennungsvorgangs, so befindet sich die Verbrennungskraftmaschine in einem sogenannten mageren Arbeitsmodus mit λ > 1 (Magerbetrieb). Der sinkende Anteil der Reduktionsmittel am Abgas führt in dem Magerbetrieb allerdings auch dazu, daß das ebenfalls während des Verbrennungsvorgangs gebildete NOₓ nicht mehr in einem ausreichenden Maße an den Katalysatoren zu Stickstoff reduziert werden kann. Um dennoch eine NOₓ-Emission stromab der Katalysatoren möglichst gering zu halten, ist bekannt, in dem NOₓ-Abgaskanal NOₓ-Speicher anzuordnen, die während des Magerbetriebs das NOₓ als Nitrat absorbieren und zwar so lange, bis entweder eine NOₓ-Desorptionstemperatur überschritten wird oder eine NOₓ-Speicherfähigkeit erschöpft ist. Vor diesem Zeitpunkt muß demnach der NOₓ-Speicherkatalysator (NOₓ-Speicher und Katalysator) regeneriert werden, das heißt, die Verbrennungskraftmaschine muß von dem Magerbetrieb in den Regenerationsbetrieb geschaltet werden. Während einer NOₓ-Regeneration findet dann eine NOₓ-Desorption mit gleichzeitiger katalytischer Reduktion statt.

Während des Verbrennungsvorgangs bildet sich aufgrund wechselnder Anteile von Schwefel im Kraftstoff Schwefeloxide SOₓ, die als Sulfate ebenfalls im NOₓ-Speicherkatalysator eingelagert werden. Zur SOₓ-Regeneration (Entschwefelung) sind allerdings wesentlich höhere Regenerationstemperaturen als bei der NOₓ-Regeneration notwendig, so daß zur Entschwefelung der NOₓ-Speicherkatalysator im allgemeinen zusätzlich beheizt werden muß. Eine Einleitung der Regeneration (NOₓ- und/oder SOₓ-Regeneration) kann anhand ausgewählter Parameter, beispielsweise der durch einen geeigneten Sensor stromab des NOₓ-Speicherkatalysators gemessenen NOₓ-Emission, festgelegt werden. Derartige Verfahren sind bekannt.

Bekannt ist ferner, der Verbrennungskraftmaschine Mittel zuzuordnen, die durch eine zumindest temporäre Beeinflussung eines Betriebsparameters der Verbrennungskraftmaschine eine Einstellung des Arbeitsmodus ermöglichen. Derartige Mittel können beispielsweise Abgasrückführungssysteme oder auch ein Einspritzsystem umfassen, mit dem ein Einspritzbeginn sowie ein Einspritzdruck geregelt werden kann.

Nachteilig bei den bekannten Verfahren ist es, daß es während der Regeneration, insbesondere bei der Entschwefelung, zu einer starken Partikel- beziehungsweise Rußbildung kommen kann. Gerade bei Dieselbrennkraftmaschinen führt dies unter ungünstigen Betriebsbedingungen zu erheblichen Rußemissionen.

Ferner ist nachteilig, daß es während der Regeneration zu einer Änderung, insbesondere Abfall, eines Drehmomentes der Verbrennungskraftmaschine kommen kann. Dies kann ein Fahrverhalten des Kraftfahrzeuges beeinflussen und zu gefährlichen Fahrsituationen führen.

Aufgabe des erfindungsgemäßen Verfahrens ist es, die Rußbildung bei der Regeneration möglichst gering zu halten und dabei dennoch in einem ausreichenden Maße Reduktionsmittel zur Verfügung zu stellen. Weiterhin soll durch den Regenerationsvorgang das Motordrehmoment nach Möglichkeit nicht verändert werden.

Erfindungsgemäß wird diese Aufgabe durch das Verfahren zur Regelung des Verbrennungsvorgangs während der Regeneration des in dem Abgaskanal angeordneten NOₓ-Speicherkatalysators mit den Merkmalen des Anspruchs 1 gelöst. Dadurch, daß ein Einspritzbeginn in Abhängigkeit von dem Arbeitsmodus der Verbrennungskraftmaschine festgelegt wird, ist es möglich, den Verbrennungsvorgang derart zu beeinflussen, daß in einem ausreichenden Maße Reduktionsmittel gebildet werden, ohne daß es zur Rußbildung kommt. In bevorzugter Weise wird dazu der Einspritzbeginn in dem Regenerationsbetrieb auf einen früheren Zeitpunkt als im Magerbetrieb gelegt, so daß insgesamt der Verbrennungsvorgang verlängert wird und damit einhergehend eine Partikelgröße unverbrannter Kohlenwasserstoffe verringert wird. Vorteilhaft ist es ferner, während der Regeneration gleichzeitig einen Einspritzdruck zu erhöhen, so daß der Gehalt des Kraftstoffes am Luft-Kraftstoff-Gemisch zusätzlich erhöht werden kann. Damit ist es zum einen möglich, auch noch bei hohen angeforderten Lasten die Regeneration drehmomentneutral durchzuführen. Zum anderen wird eine Masse an Reduktionsmitteln pro Zeiteinheit erhöht, so daß insgesamt eine Regenerationsdauer und damit ein Kraftstoffmehrverbrauch gemindert werden kann.

In bevorzugter Weise werden der Einspritzbeginn und/oder der Einspritzdruck in Abhängigkeit von den Betriebsparametern der Verbrennungskraftmaschine festgelegt. So kann beispielsweise zur Gewährung einer Drehmomentneutralität bei der Festlegung die angeforderte Last oder eine Drehzahl der Verbrennungskraftmaschine berücksichtigt werden.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine Anordnung eines Speicherkatalysators in einem Abgaskanal einer Verbrennungskraftmaschine und
- Figur 2: ein Flußdiagramm zur Regelung eines Verbrennungsvorgangs gemäß dem erfindungsgemäßen Verfahren.

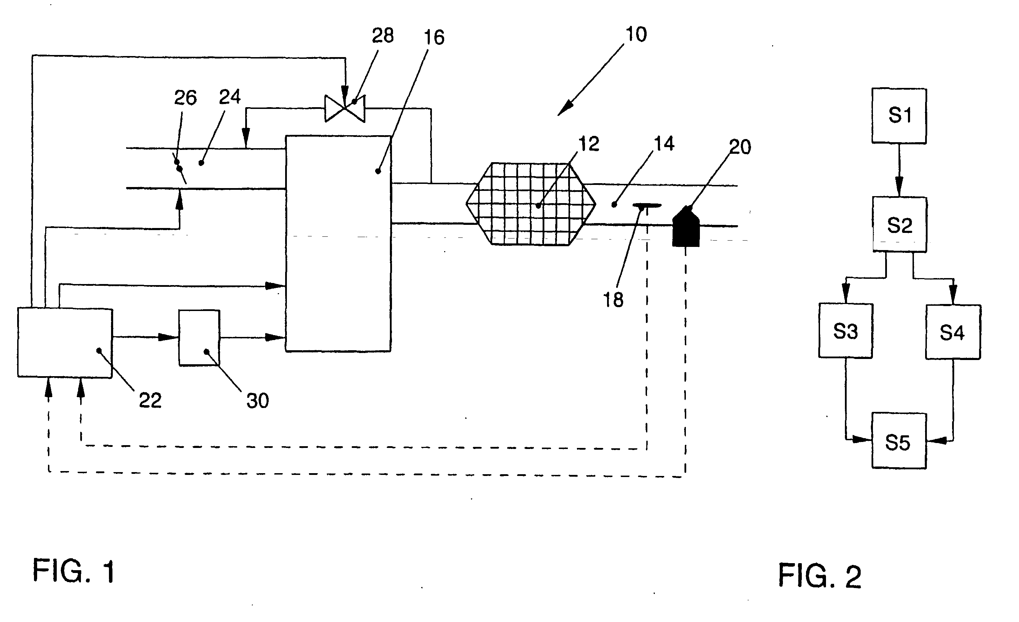

In der Figur 1 ist eine Anordnung 10 eines NOₓ-Speicherkatalysators 12 in einem Abgaskanal 14 einer Verbrennungskraftmaschine 16 beispielhaft dargestellt. Stromab des NOₓ-Speicherkatalysators 12 sind zusätzlich ein Temperatursensor 18 und ein Gassensor 20 in dem Abgaskanal 14 angeordnet. Ein Arbeitsmodus der Verbrennungskraftmaschine 16 kann mittels eines Motorsteuergerätes 22 geregelt werden. Wird beispielsweise ein Arbeitsmodus mit λ ≤ 1 (Regenerationsbetrieb) gewünscht, so muß eine Sauerstoffkonzentration in einem Saugrohr 24 vor einer Verbrennung eines Luft-Kraftstoff-Gemisches gesenkt werden. Damit erhöht sich ein Gehalt an Reduktionsmitteln wie CO, HC oder H₂ im Abgas im Vergleich zu einem Gehalt an Sauerstoff. Beispielsweise kann ein solcher Arbeitsmodus durch eine Reduzierung eines Volumenstroms angesaugter Luft mittels einer Drosselklappe 26 und durch gleichzeitige Zuführung sauerstoffarmen Abgases über ein Abgasrückflußventil 28 erfolgen. Das Motorsteuergerät 22 regelt ferner ein Einspritzsystem 30, welches eine Kraftstoffzufuhr unter einem vorgebbaren Einspritzdruck ermöglicht. Ebenso kann ein Einspritzbeginn festgelegt werden.

In einem Realbetrieb der Verbrennungskraftmaschine 16 wird zur Minderung eines Kraftstoffverbrauchs ein Arbeitsmodus mit λ > 1 (Magerbetrieb) eingestellt. Dabei wird während des Verbrennungsvorgangs entstandenes NOₓ und SOₓ als Nitrat beziehungsweise Sulfat im NOₓ-Speicherkatalysator 12 absorbiert. Im Magerbetrieb ist der Anteil der Reduktionsmitteln gering und eine vollständige Reduktion von NOₓ beziehungsweise SOₓ mit Hilfe der Reduktionsmittel ist daher im Magerbetrieb nicht möglich. Eine Speicherkapazität des NOₓ-Speicherkatalysators 12 ist allerdings nur begrenzt. So findet einerseits oberhalb einer NOₓ-Desorptionstemperatur eine NOₓ-Desorption statt und andererseits ist beim Erreichen bestimmter NOₓ- und SOₓ-Beladungszustände eine NOₓ-Speicherfähigkeit erschöpft. Eine Regenerationsnotwendigkeit kann dabei beispielsweise mit Hilfe der Sensoren 18, 20 als eine Katalysatortemperatur oder eine NOₓ-Emission in bekannter Weise erfaßt oder aber auch mittels geeigneter Modelle berechnet werden. Dererlei Verfahren sind bekannt und sollen hier nicht näher erläutert werden.

Eine Regeneration (NOₓ-Regeneration und/oder SOₓ-Regeneration; Entschwefelung) des NOₓ-Speicherkatalysators 12 erfordert den Regenerationsbetrieb und gegebenenfalls ein zusätzliches Aufheizen des NOₓ-Speicherkatalysators 12 auf eine Mindestregenerationstemperatur, insbesondere bei der Entschwefelung. Wie beispielhaft bereits ausgeführt, eignen sich Mittel wie die Abgasrückführung und die Regelung des Volumenstromes über die Drosselklappe 26 zur Einleitung eines Wechsels des Arbeitsmodus der Verbrennungskraftmaschine 16 vom Magerbetrieb in den Regenerationsbetrieb. Erfindungsgemäß wird zusätzlich das Einspritzsystem 30 derart gesteuert, daß der Einspritzbeginn in dem Regenerationsbetrieb auf einen früheren Zeitpunkt als im Magerbetrieb gelegt wird, um die Rußbildung zu unterdrücken.

Die Figur 2 zeigt in einem Flußdiagramm beispielhaft auf, wie eine solche Regulierung des Einspritzsystems 30 erfolgen kann. Zunächst wird in einem Schritt S1, wie bereits erläutert, die Regenerationsnotwendigkeit gemessen oder berechnet. Nach Vorliegen der Regenerationsnotwendigkeit des NOₓ-Speicherkatalysators 12 werden anschließend in einem Schritt S2 der Arbeitsmodus und ausgewählte Betriebsparameter der Verbrennungskraftmaschine 16 erfaßt.

In einem nachfolgenden Schritt S3 wird anhand dieser Daten ein Einspritzbeginn festgelegt. Daneben kann zusätzlich ein Einspritzdruck erhöht werden. Durch die Erhöhung des Einspritzdrucks wird ein Betriebsbereich der Verbrennungskraftmaschine 16, in dem die Regeneration drehmomentneutral durchgeführt werden kann, beeinflußt. Dazu wird ein Einspritzvolumen des Kraftstoffes pro Kurbelwellenwinkel derart gewählt, daß insgesamt keine Änderung des Drehmomentes der Verbrennungskraftmaschine 16 beim Wechsel vom Magerbetrieb in den Regenerationsbetrieb auftritt. Indem der Einspritzdruck erhöht werden kann, ist auch das Einspritzvolumen pro Kurbelwellenwinkel erhöht und damit der drehmomentneutrale Betriebsbereich erweitert. Daneben sinkt eine Regenerationsdauer, da eine Masse an Reduktionsmitten pro Zeiteinheit steigt. Die Festlegung des Einspritzbeginns beziehungsweise Einspritzdrucks kann damit unmittelbar abhängig gemacht werden von Betriebsparametern, wie einer Drehzahl oder einer angeforderten Last. Selbstverständlich kann der Einspritzbeginn und/oder der Einspritzdruck auch während der Regeneration, gegebenenfalls infolge geänderter Betriebsparameter, neu festgelegt werden.

Parallel zur Festlegung des Einspritzbeginns beziehungsweise des Einspritzdrucks erfolgt eine Auswahl zusätzlich benötigter Mittel zur Beeinflussung des Arbeitsmodus der Verbrennungskraftmaschine 16, wie die Abgasrückführung und die Regelung des Volumenstroms im Saugrohr 24. In einem Schritt S5 erfolgt dann anschließend der Wechsel in den Regenerationsbetrieb.

## Patentansprüche

1. Verfahren zur Regelung eines Verbrennungsvorgangs in einer Verbrennungskraftmaschine (16) während einer Regeneration eines in einem Abgaskanal (14) der Verbrennungskraftmaschine (16) angeordneten NOₓ-Speicherkatalysators (12), wobei der Verbrennungskraftmaschine (16) Mittel zugeordnet sind, die durch eine zumindest temporäre Beeinflussung eines Betriebsparameters der Verbrennungskraftmaschine (16) eine Einstellung eines Arbeitsmodus ermöglichen und die ein Einspritzsystem (30) umfassen, und wobei im Regenerationsbetrieb zur Regeneration des NOₓ-Speicherkatalysators (12) ein Einspritzbeginn auf einen früheren Zeitpunkt als im Magerbetrieb mit λ > 1 gelegt wird und ein Einspritzdruck erhöht wird und ein Arbeitsmodus mit λ ≤ 1 im Wesentlichen durch Reduzierung eines Volumenstroms angesaugter Luft und durch Abgasrückführung eingestellt wird.

2. Verfahren nach Anspruch 1, **dadurch gekennzeichnet, dass** ein Einspritzvolumen pro Kurbelwellenwinkel im Regenerationsbetrieb erhöht wird.

3. Verfahren nach einem der vorhergehenden Ansprüche, **dadurch gekennzeichnet, dass** der Einspritzbeginn und/oder der Einspritzdruck in Abhängigkeit von Betriebsparametem der Verbrennungskraftmaschine (16) festgelegt wird.

4. Verfahren nach Anspruch 3, **dadurch gekennzeichnet, dass** die Betriebsparameter der Verbrennungskraftmaschine (16) eine angeforderte Last und eine Drehzahl umfassen.

5. Verfahren nach einem der vorhergehenden Ansprüche, **dadurch gekennzeichnet, dass** der NOₓ-Speicherkatalysator (12) im Regenerationsbetrieb entschwefelt wird.

6. Verfahren nach einem der vorhergehenden Ansprüche, **dadurch gekennzeichnet, dass** die Regeneration in einem vorgebbaren Betriebsbereich der Verbrennungskraftmaschine (16) drehmomentneutral durchgeführt wird.

## Claims

1. Method for controlling a combustion process in a combustion engine (16) during a regeneration of an NOₓ storage catalyst (12), which is arranged in an exhaust duct (14) of the combustion engine (16), wherein means are allocated to the combustion engine (16), which allow an adjustment of an operating mode through an at least temporary influence of an operating parameter of the combustion engine (16) and which comprise an injection system (30), and wherein, in order to regenerate the NOₓ storage catalyst (12) in the regeneration mode, a start of injection is displaced to an earlier point in time than in the lean operating mode with λ > 1, and an injection pressure is increased, and an operating mode with λ ≤ 1 is set essentially by reducing a volume flow of intake air and by recycling exhaust gas.

2. Method according to claim 1, **characterised in that** an injection volume per crank angle is increased in the regeneration mode.

3. Method according to any one of the preceding claims, **characterised in that** the start of injection and/or the injection pressure is established in dependence upon operating parameters of the combustion engine (16).

4. Method according to claim 3, **characterised in that** the operating parameters of the combustion engine (16) comprise a required loading and an engine speed.

5. Method according to any one of the preceding claims, **characterised in that** the NOₓ storage catalyst (12) is desulfured in the regeneration mode.

6. Method according to any one of the preceding claims, **characterised in that** the regeneration is carried out in a torque-neutral manner within a predeterminable operating range of the combustion engine (16).

## Revendications

1. Procédé de régulation d'une opération de combustion dans un moteur (16) à combustion interne, pendant une régénération d'un catalyseur (12) à accumulation de NOₓ logé dans un canal d'échappement (14) dudit moteur (16) à combustion interne, ledit moteur (16) à combustion interne étant associé à des moyens qui permettent le réglage d'un mode de travail par influence exercée, au moins temporairement, sur un paramètre de fonctionnement dudit moteur (16) à combustion interne, et qui renferment un système d'injection (30), sachant que, durant le mode régénératif visant la régénération du catalyseur (12) à accumulation de NOₓ, un commencement d'injection est fixé à un instant plus précoce qu'en régime pauvre, avec λ > 1, et une pression d'injection est accrue, et un mode de travail avec λ ≤ 1 est réglé, pour l'essentiel, par diminution d'un flux volumique d'air aspiré et par recyclage des gaz d'échappement.

2. Procédé selon la revendication 1, **caractérisé par** l'accroissement d'un volume d'injection par angle de vilebrequin en mode régénératif.

3. Procédé selon l'une des revendications précédentes, **caractérisé par le fait que** le commencement de l'injection et/ou la pression d'injection est fermement établi(e) en dépendance avec des paramètres de fonctionnement du moteur (16) à combustion interne.

4. Procédé selon la revendication 3, **caractérisé par le fait que** les paramètres de fonctionnement du moteur (16) à combustion interne comprennent une charge prescrite et une vitesse de rotation.

5. Procédé selon l'une des revendications précédentes, **caractérisé par le fait que** le catalyseur (12) à accumulation de NOₓ est désulfurisé en mode régénératif.

6. Procédé selon l'une des revendications précédentes, **caractérisé par le fait que** la régénération est exécutée dans une plage de fonctionnement du moteur (16) à combustion interne pouvant être préétablie, avec neutralité vis-à-vis du couple de rotation.
